# EUROPÄISCHE PATENTSCHRIFT

(11) **EP 4 696 948 B1**
(45) Veröffentlichungstag und Bekanntmachung des Hinweises auf die Patenterteilung: **25.11.2026**
(21) Anmeldenummer: 25193067.3
(22) Anmeldetag: 31.07.2025
(51) Int. Cl.: F24S 23/74, F24S 30/425, F24S 25/13, F24S 23/70, F24S 25/00

(54) **MONTAGEVORRICHTUNG FÜR EIN SOLARKOLLEKTORMODUL MIT GEKRÜMMTER SPIEGELFLÄCHE SOWIE VERFAHREN ZUR MONTAGE EINES SOLARKOLLEKTORMODULS MIT GEKRÜMMTER SPIEGELFLÄCHE**
MOUNTING DEVICE FOR A SOLAR COLLECTOR MODULE HAVING A CURVED MIRROR SURFACE AND METHOD FOR MOUNTING A SOLAR COLLECTOR MODULE HAVING A CURVED MIRROR SURFACE
DISPOSITIF DE MONTAGE POUR MODULE DE COLLECTEUR SOLAIRE À SURFACE RÉFLÉCHISSANTE INCURVÉE ET PROCÉDÉ DE MONTAGE DE MODULE DE COLLECTEUR SOLAIRE À SURFACE RÉFLÉCHISSANTE INCURVÉE

(30) Priorität: 14.08.2024 DE 102024123243
(43) Veröffentlichungstag der Anmeldung: 18.02.2026
(73) Patentinhaber: Deutsches Zentrum für Luft- und Raumfahrt e.V., 53227 Bonn (DE)
(72) Erfinder: Eickhoff, Martin, 51147 Köln (DE)
(74) Vertreter: dompatent

(56) Entgegenhaltungen:
- WO-A1-2011/161275
- WO-A1-2014/075821
- CA-A1- 2 781 328
- US-A1- 2010 043 779
- US-B2- 8 132 409

## Beschreibung

Die vorliegende Erfindung betrifft eine Montagevorrichtung für ein Solarkollektormodul mit gekrümmter Spiegelfläche sowie ein Verfahren zur Montage eines Solarkollektormoduls mit gekrümmter Spiegelfläche.

Solarkollektoren mit gekrümmter Spiegelfläche sind in unterschiedlichen Ausführungsformen bekannt. Beispielsweise sind Parabolrinnenkollektoren derartige Solarkollektoren, wobei diese als ein-axial bewegte optischen Systeme ausgebildet sind, die direkte Solarstrahlung mit Hilfe von Parabolspiegeln auf ein Absorberrohr konzentrieren, um ein im Absorberrohr strömendes Wärmeträgermedium zu erhitzen.

Zurzeit kommerziell eingesetzte Parabolrinnenkollektoren besitzen mehrere Pylonen, zwischen denen Kollektormodule aufgehängt sind. Ein Parabolrinnenkollektor kann beispielsweise zwölf miteinander fest verbundene Kollektormodule aufweisen, die durch einen zentralen Antrieb als eine Einheit gedreht werden.

Je nach Solarfeldgröße und Anwendung können verschiedene Parabolrinnenkollektortypen gewählt werden. Es wird üblicherweise zwischen großen und langen Parabolrinnenkollektoren, die eine Aperturweite von mehr als 3 m und eine Kollektorlänge von mehr als 30 m aufweisen, und kleinen, kurzen Parabolrinnenkollektoren, die eine Aperturweite < 2 m und eine Kollektorlänge < 30 m besitzen, unterschieden.

Bei dem Aufbau von Solarfeldern werden üblicherweise Kollektormodule in einer stationären Montagevorrichtung, die am Solarfeld errichtet wird, oder in Fabriken hergestellt, und anschließend im Solarfeld an dort errichteten Pylonen befestigt und anschließend ausgerichtet.

Bei großen und langen Parabolrinnenkollektoren erfolgt die Montage zumeist am Solarfeld in einer entsprechend dimensionierten Montagevorrichtung, um bis zu 12 m lange Kollektormodule herzustellen. Diese werden dann mittels Kran und speziellen Transportern zu der entsprechenden Montagestelle im Feld transportiert.

Bei kleineren Parabolrinnenkollektoren werden kleinere Solarkollektormodule verwendet, die einfacher handhabbar sind und beispielsweise von zwei Personen getragen werden können, sodass auf Kräne und aufwändige Transporter verzichtet werden kann. Fertige Einheiten können beispielsweise per LKW angeliefert werden.

Kleinere Kollektoren haben jedoch häufig den Nachteil eines deutlich geringeren optischen Wirkungsgrads, da sie verglichen mit großen Kollektoren mehr sich negativ auswirkende Randeffekte haben. Auch werden kleinere Kollektoren zumeist mit dünneren Absorberrohren betrieben, was zu höheren Druckverlusten führt. Die Herstellungskosten dünner Absorberrohre hoher Güte sind ferner vergleichsweise hoch. Kleinere Kollektoren benötigen auch verglichen mit großen Kollektoren eine größere Anzahl von Kollektorantrieben. Kleine Kollektoren benötigen ferner viele parallele Loops, wobei in jedem Loop der gleiche Massenstrom benötigt wird, so dass eine gleichmäßige Massenstromaufteilung sicherzustellen ist. Dadurch ist ein hoher regelungstechnischer Aufwand notwendig.

Die Montagevorrichtung am Solarfeld für große Kollektormodule hingegen ist vergleichsweise groß und muss sehr präzise sein, wodurch hohe Kosten für die Montagevorrichtung entstehen. Ferner ist der zuvor beschriebene Aufbau des Solarfelds mit großen Kollektormodulen aufgrund des benötigten Krans und speziellen Transportern sehr aufwändig. Die Montagevorrichtung vor Ort wird außerdem lediglich für eine vergleichsweise geringe Anzahl von Modulen verwendet, anders als beispielsweise bei in einer Fabrik hergestellte kleinere Module.

Heutzutage werden zumeist Solarfelder mit großen Kollektoren gebaut, wobei versucht wird, beispielsweise zwei Montagevorrichtung für ein Solarfeld zu verwenden. Da jedoch in jeder Montagevorrichtung stets nur ein Kollektormodul hergestellt werden kann, ist die Geschwindigkeit der Kollektormodulproduktion dennoch limitiert, sodass eine vergleichsweise lange Bauzeit für Solarfelder entsteht. Eine größere Anzahl von stationären Montagevorrichtung ist jedoch aufgrund der hohen Investitionskosten zumeist nicht sinnvoll.

Das zuvor Beschriebene gehört zum allgemeinen Kenntnisstand des Anmelders, bezieht sich jedoch nicht notwendigerweise auf einen konkreten veröffentlichten Stand der Technik.

Dokument WO 2011/161275 A1 beschreibt eine Montagevorrichtung für ein Solarkollektormodul mit gekrümmter Spiegelfläche gemäß dem Oberbegriff des Anspruchs 1.

Es ist Aufgabe der vorliegenden Erfindung, eine Montagevorrichtung sowie ein Verfahren zur Montage eines Solarkollektormoduls bereitzustellen, wobei die zuvor beschriebenen Nachteile möglichst vermieden und der Aufbau von Solarfeldern verbessert ist.

Die erfindungsgemäße Montagevorrichtung ist definiert durch die Merkmale des Anspruchs 1.

Das erfindungsgemäße Verfahren zur Montage eines Solarkollektormoduls ist definiert durch die Merkmale des Anspruchs 8.

Die erfindungsgemäße Montagevorrichtung für ein Solarkollektormodul mit gekrümmter Spiegelfläche weist eine Stützstruktur mit mehreren Spiegelauflageflächen auf, deren Position an der Stützstruktur und Ausrichtung an eine vorgegebene Form eines Spiegelelements oder mehrerer Spiegelelemente des Solarkollektormoduls angepasst sind bzw. dieser entsprechen, sowie mindestens zwei Aufhängehalterungen zum Aufhängen der Stützstruktur an Lagerständerungen des Solarkollektormoduls. Ferner weist die Montagevorrichtung mindestens eine Befestigungsvorrichtung zur lösbaren Fixierung einer Rahmenstruktur des Solarkollektormoduls an der Stützstruktur auf.

Die erfindungsgemäße Montagevorrichtung ermöglich eine Montage des Solarkollektormoduls direkt an dem Aufstellort, indem die Stützstruktur an den Lagerständerungen des Solarkollektormoduls aufgehängt werden kann und mit Hilfe von dieser das Solarkollektormodul montiert wird. Auf die Stützstruktur kann dabei ein oder können mehrere Spiegelelemente aufgelegt werden und an der Rahmenstruktur des Solarkollektormoduls befestigt werden. Da die Stützstruktur mittels der mindestens einen Befestigungsvorrichtung an der Rahmenstruktur des Solarkollektormoduls befestigt ist, sind die Stützstruktur und die Rahmenstruktur des Solarkollektormoduls zueinander ausgerichtet und verbleiben während der Montage in dieser Position, sodass das Spiegelelement oder die Spiegelelemente in vorteilhafter Weise an ihrer richtigen Position angeordnet werden kann bzw. können. Da die Stützstruktur entsprechende Spiegelauflageflächen aufweist, deren Position an der Stützstruktur in Ausrichtung der vorgegebenen Form des Spiegelelements oder der mehreren Spiegelelemente entsprechen, kann das Spiegelelement bzw. können die Spiegelelemente in vorteilhafter Weise positioniert werden. Nachdem alle Spiegelelemente eingesetzt sind und mit der Rahmenstruktur des Solarkollektormoduls verbunden sind, kann die Montagevorrichtung abgenommen werden und zu einer weiteren Position eines Solarkollektormoduls transportiert werden, um dieses weitere Solarkollektormodul zu montieren.

Die erfindungsgemäße Montagevorrichtung besitzt einen vergleichsweise einfachen Aufbau und kann beispielsweise in Leichtbauweise hergestellt sein. Dadurch ist sie in vorteilhafter Weise mobil transportierbar und kostengünstig herstellbar. Somit können für ein Solarfeld mehrere erfindungsgemäße Montagevorrichtungen vorgesehen sein, die beispielsweise von Monteuren getragen werden können. Dadurch ist ein sehr schneller, kostengünstiger Aufbau von Solarfeldern möglich.

Die erfindungsgemäße Montagevorrichtung ist insbesondere für Kollektormodule von Parabolrinnenkollektoren geeignet. Grundsätzlich kann die Montagevorrichtung jedoch auch für andere Solarkollektormodule mit gekrümmter Spiegelfläche wie beispielsweise sogenannte Dish-Kollektoren.

Unter Solarkollektormodulen mit gekrümmter Spiegelfläche werden im Rahmen der Erfindung auch solche Solarkollektormodule verstanden, die eine nicht stetig gekrümmte Spiegelfläche aufweise und beispielsweise aus einer Vielzahl von ebenen Facetten bestehen, die entlang einer Krümmung angeordnet sind.

Vorzugsweise ist vorgesehen, dass die Stützstruktur Aussparungen zum Durchführen von Spiegelstabilitätsstreben aufweist. Bei einigen Spiegeln sind an der Außenseite der Spiegelelemente zusätzliche Spiegelstabilitätsstreben vorgesehen, die das Spiegelelement oder die Spiegelelemente mit der Rahmenstruktur des Solarkollektormoduls verbinden und die Stabilität der Spiegelelemente und somit die Formsteifigkeit der Spiegelfläche erhöhen. Um diese Spiegelstabilitätsstreben montieren zu können, bevor die Montagevorrichtung entfernt wird, kann die Montagevorrichtung entsprechende Aussparungen aufweisen. Dadurch können die Spiegelstabilitätsstreben zu einem Zeitpunkt, an dem die Stützstruktur die Form des Solarkollektormoduls stützt, angebracht werden, sodass vermieden wird, dass sich die Form des Solarkollektormoduls bei einem späteren Anbringen der Spiegelstabilitätsstreben noch verändert.

Insbesondere kann vorgesehen sein, dass die Stützstruktur aus einer Gitterstruktur besteht. Eine derartige Struktur ermöglicht einerseits auf einfache Art und Weise die Bereitstellung einer Aussparung zum Durchführen von Spiegelstabilitätsstreben und bietet darüber hinaus andererseits eine sehr leichte und konstruktiv einfache Struktur, die dennoch eine hohe Stabilität besitzt.

In einem bevorzugten Ausführungsbeispiel der Erfindung ist vorgesehen, dass die Aufhängehalterungen jeweils einen Vorsprung aufweisen, der an eine Lageraussparung eines der Lagerständerungen angepasst ist, wobei der Vorsprung in die jeweilige Lageraussparung einsetzbar ist. Die Stützstruktur kann somit an den Lagerständerungen aufgehängt werden, indem die Vorsprünge der Aufhängehalterungen in die Lageraussparungen eingesetzt werden. Dadurch kann insbesondere auch erreicht werden, dass die Stützstruktur gegenüber den Lagerständerungen verdrehbar ist, sodass die Stützstruktur zusammen mit der Rahmenstruktur vor dem Einsetzen des oder der Spiegelelemente in eine besser erreichbare Position zum Einlegen des oder der Spiegelelemente verdreht werden kann.

Vorzugsweise ist vorgesehen, dass die vorgegebene Form eine Parabolform ist.

Die Stützstruktur kann mehrere Gitterstrebengruppen aufweisen, die sich in Krümmungsrichtung erstrecken, wobei jeweils eine Gruppe von Spiegelauflageflächen an einer Gitterstrebengruppe angeordnet ist.

Bei der erfindungsgemäßen Montagevorrichtung kann vorgesehen sein, dass die Spiegelauflageflächen durch Spiegelauflageblöcke gebildet sind.

Eine Gruppe von Spiegelauflageflächen kann mindestens vier, vorzugsweise mindestens sechs, Spiegelauflageflächen umfassen. Eine derartige Anzahl hat sich für das Abstützen entlang der gekrümmten Form als besonders vorteilhaft herausgestellt.

Die Montagevorrichtung kann beispielsweise für Solarkollektormodule mit einer Modullänge von beispielsweise 4 m geeignet sein, sodass die Stützstruktur ebenfalls eine Länge von 4 m aufweisen kann. Die Solarkollektormodule können beispielsweise eine Aperturweite von 4,20 m besitzen. Da die Spiegelelemente beim Auflegen auf die Stützstruktur über die Stützstruktur überstehen sollten, um eine Befestigung der Spiegelelemente an der Rahmenstruktur auf einfache Art und Weise zu ermöglichen, ist es ausreichend, wenn die Stützstruktur eine Breite von beispielsweise 4 m besitzt.

Das erfindungsgemäße Verfahren zur Montage eines Solarkollektormoduls mit gekrümmter Spiegelfläche sieht folgende Schritte vor:
a) Anbringen einer Rahmenstruktur des Solarkollektormoduls an mindestens zwei Lagerständerungen des Solarkollektormoduls,
b) Anordnen einer erfindungsgemäßen Montagevorrichtung an den Lagerständerungen, wobei die Stützstruktur an den Lagerständerungen mittels Aufhängehalterungen aufgehängt und in eine Grundstellung ausgerichtet wird,
c) Fixierung der Rahmenstruktur des Solarkollektormoduls an der Stützstruktur mittels der mindestens einen Befestigungsvorrichtung,
d) Auflegen mindestens eines Spiegelelementes auf die Spiegelauflageflächen,
e) Befestigen des mindestens einen Spiegelelementes an der Rahmenstruktur,
f) Lösen der der Stützstruktur von der Rahmenstruktur des Solarkollektormoduls
g) Abnehmen der Montagevorrichtung von den Lagerständerungen.

Mittels des erfindungsgemäßen Verfahrens lässt sich somit auf einfache Art und Weise ein Solarkollektormodul direkt am Einsatzort montieren. Dadurch wird ein aufwändiger Transport eines kompletten Solarkollektormoduls zu den Lagerständerungen vermieden und ein Solarfeld kann auf einfache Art und Weise aufgebaut werden.

Bei dem erfindungsgemäßen Verfahren kann auch vorgesehen sein, dass die Schritte a) und b) in vertauschter Reihenfolge durchgeführt werden, sodass erst die Montagevorrichtung an den Lagerständerungen angeordnet wird, bevor die Rahmenstruktur angebracht wird.

Je nach Ausgestaltung der Lagerständerungen besteht auch grundsätzlich die Möglichkeit, dass die Rahmenstruktur zunächst an der Stützstruktur befestigt wird und diese dann gemeinsam an den Lagerständerungen angeordnet werden.

Vorzugsweise ist vorgesehen, dass in Schritt b) die Stützstruktur an den Lagerständerungen mittels der Aufhängehalterungen aufgehängt wird, indem jeweils der Vorsprung einer der Auflagehalterungen in eine Lageraussparung einer der Lagerständerungen eingesetzt wird. Dadurch kann die Montagevorrichtung in vorteilhafter Weise an den Lagerständerungen angeordnet werden. Da die Lagerständerungen von Solarkollektormodulen grundsätzlich sehr genau ausgerichtet sind, ist die Aufhängung der Stützstruktur mittels der Vorsprünge, die in die Lageraussparungen der Lagerständerungen eingesetzt werden, von besonderem Vorteil, da dadurch eine besonders präzise Ausrichtung der Stützstruktur möglich ist.

Es kann vorgesehen sein, dass die Vorsprünge der Aufhängehalterungen jeweils drehbar in der entsprechenden Lageraussparung gehaltert sind. Dadurch kann die Stützstruktur zusammen mit der Rahmenstruktur gegenüber den Lagerständerungen verdreht werden, sodass ein Auflegen des mindestens einen Spiegelelementes auf die Spiegelauflageflächen in vorteilhafter Weise möglich ist.

Vorzugsweise ist vorgesehen, dass in Schritt d) mehrere Spiegelelemente auf die Spiegelauflageflächen aufgelegt werden, wobei jedes der Spiegelelemente an der Rahmenstruktur befestigt wird. Die Spiegelelemente können beispielsweise eine Größe von 2 x 2,5 m aufweisen. Durch das Vorsehen mehrerer Spiegelelemente, die eine vergleichbar kleine Größe aufweisen, können diese in vorteilhafter Weise an die Montageposition transportiert werden und sind gut handhabbar. Aus den mehreren Spiegelelementen können dann Solarkollektormodule gewünschter Größe zusammengesetzt werden.

Vorzugsweise ist vorgesehen, dass die Stützstruktur zusammen mit der Rahmenstruktur in eine erste Richtung gedreht wird und eine erste Anzahl von Spiegelelementen aufgelegt und an der Rahmenstruktur befestigt wird, und anschließend die Stützstruktur zusammen mit der Rahmenstruktur in eine zweite Richtung gedreht wird und eine zweite Anzahl von Spiegelelementen aufgelegt und an der Rahmenstruktur befestigt wird. Mit anderen Worten: Bei der Montage kann die Stützstruktur zunächst in eine Richtung gedreht werden, sodass die Spiegelelemente einer Seite des Solarkollektormoduls angeordnet und befestigt werden können, und anschließend wird die Stützstruktur zusammen mit den bereits befestigten Spiegelelementen so weit verdreht, dass an der anderen Seite Spiegelelemente aufgelegt und befestigt werden können. Dadurch ist eine besonders vorteilhafte Montage des Solarkollektormoduls möglich.

Hierbei kann vorgesehen sein, dass das Verdrehen in die erste Richtung um mindestens 45° von der Grundstellung der Stützstruktur aus erfolgt und das Verdrehen in die zweite Richtung ebenfalls um mindestens 45° von der Grundstellung der Stützstruktur aus erfolgt. Durch die Verdrehung um mindestens 45° in die entsprechende Richtung lassen sich die Spiegelelemente in besonders vorteilhafter Weise auflegen.

Bei dem erfindungsgemäßen Verfahren kann ferner vorgesehen sein, dass in Schritt a) anschließend die Rahmenstruktur in Zenitstellung ausgerichtet wird, vorzugsweise durch eine Inklinometermessung. Dadurch ist eine besonders genaue Montage des Solarkollektormoduls möglich, da die Rahmenstruktur vor der anschließenden Montage exakt ausgerichtet ist.

Auch kann vorgesehen sein, dass in Schritt b) die Grundstellung der Stützstruktur die Zenitstellung ist, wobei vorzugsweise die Ausrichtung durch Inklinometermessung erfolgt. Dadurch ist sichergestellt, dass auch die Stützstruktur sehr genau ausgerichtet ist, sodass vor dem Auflegen der Spiegel die Stützstruktur eine Präzise Position einnimmt.

Das Befestigen des Spiegelelementes oder der Spiegelelemente an der Rahmenstruktur in Schritt e) kann mit verstellbaren Spiegelklammern erfolgen, mittels denen eine Feineinstellung erfolgen kann, wodurch Ungenauigkeiten der Rahmenstruktur ausgeglichen werden können.

Bei einer bevorzugten Ausführungsform der Erfindung ist vorgesehen, dass zwischen Schritten e) und f) Spiegelstabilitätsstreben angebracht werden, die die Rahmenstruktur mit einer Außenseite des Spiegelelements oder mit Außenseiten der Spiegelelemente verbinden.

Bei dem erfindungsgemäßen Verfahren können somit auf einfache Art und Weise zusätzliche Spiegelstabilitätsstreben, die für eine erhöhte Stabilität der Spiegelelemente und somit der Spiegelfläche Sorge tragen, befestigt werden. Durch das Anbringen der Spiegelstabilitätsstreben zwischen Schritten e) und f) wird sichergestellt, dass durch die Stützstruktur das Spiegelelement oder die Spiegelelemente noch weiterhin stützen, sodass ein präzises Anbringen der Spiegelstabilitätsstreben möglich ist, ohne dass die vorgegebene Form für die Spiegelelemente beeinflusst wird.

Im Rahmen der Erfindung kann auch vorgesehen sein, dass eine Rahmenstruktur für mehrere Solarkollektormodule vorgesehen ist und beispielsweise sich in Längsrichtung erstreckende sogenannte Torsionsboxen aufweist. Somit kann bei dem erfindungsgemäßen Verfahren zur Montage eines Solarkollektormoduls die Rahmenstruktur an eine Vielzahl von Lagerständerungen angebracht werden und nur zwischen zwei Lagerständerungen die erfindungsgemäße Montagevorrichtung angeordnet werden, um das entsprechende Solarkollektormodul zu montieren. Anschließend kann die Montagevorrichtung abgenommen werden und zwischen den nächsten beiden Lagerständerungen angeordnet werden, wobei die Rahmenstruktur bereits durch die Montage des vorangegangenen Solarkollektormoduls installiert ist.

Im Folgenden wird unter Bezugnahme auf die nachfolgenden Figuren die Erfindung näher erläutert. Es zeigen:
- Fig. 1: eine schematische Ansicht einer erfindungsgemäßen Montagevorrichtung für ein Solarmodul mit gekrümmter Spiegelfläche in einem an Lagerständerungen aufgehängten Zustand,
- Fig. 2: eine schematische Seitenansicht der in Fig. 1 dargestellten Montagevorrichtung und
- Fig. 3: eine schematische Ansicht der in Fig. 1 dargestellten Montagevorrichtung mit montierten Solarkollektormodulen.

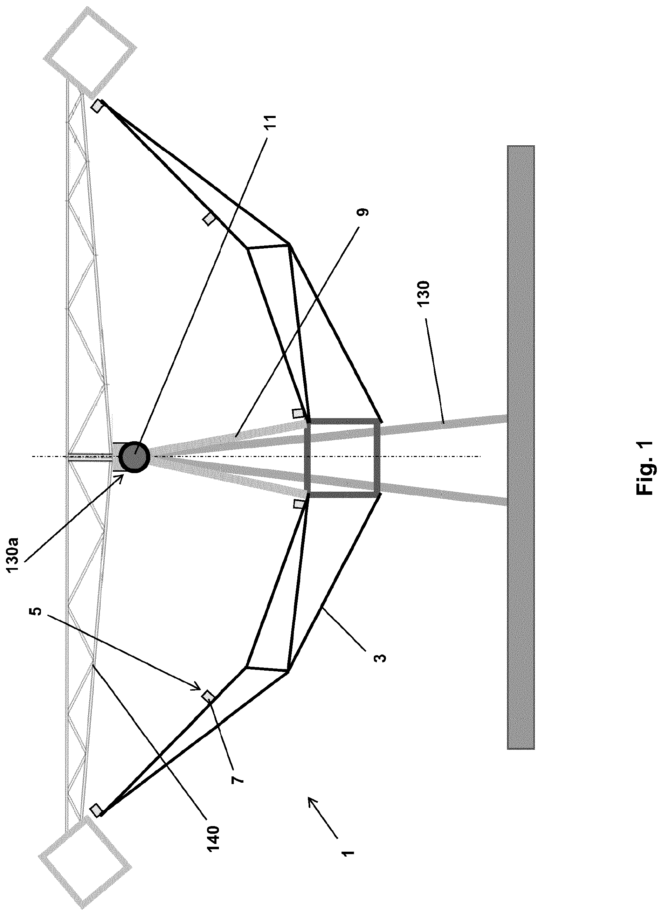

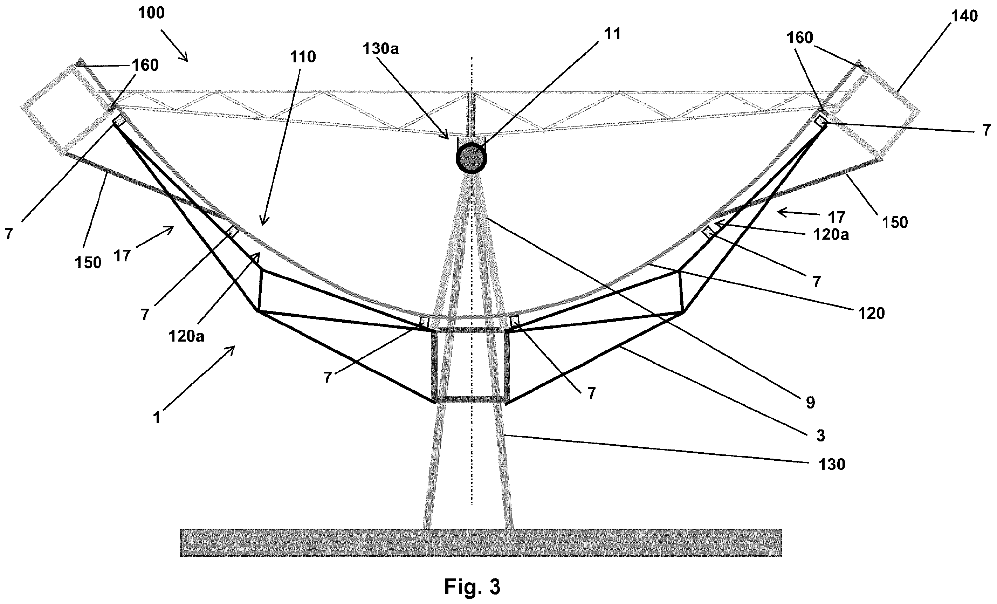

In den Fign. 1 bis 3 ist eine erfindungsgemäße Montagevorrichtung 1 für ein Solarkollektormodul 100 mit gekrümmter Spiegelfläche 110 schematisch dargestellt.

Die Montagevorrichtung 1 weist eine Stützstruktur 3 mit mehreren Spiegelauflageflächen 5 auf. Die Spiegelauflageflächen 5 sind durch Spiegelauflageblöcke 7 gebildet, die an der Stützstruktur 3 befestigt sind. Die Position der Spiegelauflageblöcke 7 und der entsprechenden Spiegelauflageflächen 5 an der Stützstruktur 3 und deren Ausrichtung sind an eine vorgegebene Form eines Spiegelelements 120 oder mehrerer Spiegelelemente 120 des Solarkollektormoduls 100 angepasst. Mit anderen Worten: Eine Verbindung der Spiegelauflageflächen 5 ergibt die vorgegebene Form des Spiegelelements 120 oder mehrerer Spiegelelemente 120 des Solarkollektormoduls 100.

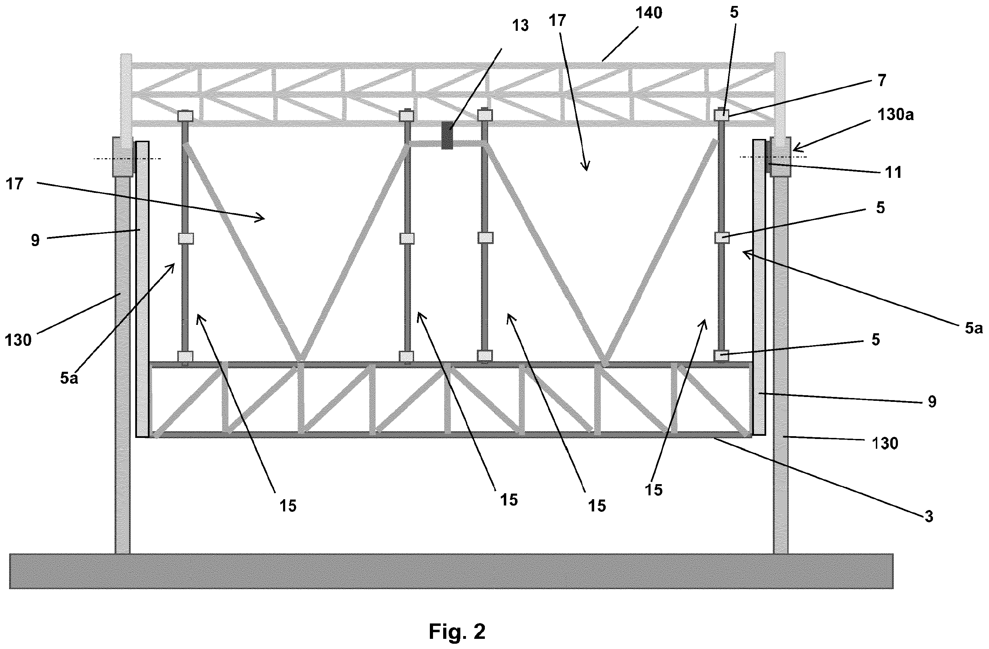

Die Stützstruktur 3 ist mittels zwei Aufhängehalterungen 9 an Lagerständerungen 130 des Solarkollektormoduls 100 aufgehängt. Die Aufhängehalterungen 9 weisen dazu jeweils einen Vorsprung 11 auf, der in Lageraussparungen 130a der Lagerständerungen 130 eingreift, wie aus Fig. 2 ersichtlich ist. Die Stützstruktur 3 ist somit drehbar an den Lagerständerungen 130 gelagert.

Bei der Montage des Solarkollektormoduls 100 wird ferner eine Rahmenstruktur 140 des Solarkollektormoduls 100 an den Lagerständerungen 130 angeordnet. Mit dieser Rahmenstruktur 140 wird die Montagevorrichtung 1 mittels mindestens einer Befestigungsvorrichtung 13 lösbar fixiert. Dadurch kann die Stützstruktur 3 zusammen mit der Rahmenstruktur 140 bewegt werden.

Die Stützstruktur 3 ist als Gitterstruktur ausgebildet. Dabei weist die Stützstruktur 3 mehrere Gitterstrebengruppen 15 auf, die sich in Krümmungsrichtung des zu montierenden Solarkollektormoduls 100 erstrecken. Jeweils eine Gruppe 5a von Spiegelauflageblöcken 7 mit Spiegelauflageflächen 5 sind an einer Gitterstrebengruppe 15 angeordnet. Bei dem in den Fign. dargestellten Ausführungsbeispiel besteht eine Gruppe 5a von Spiegelauflageflächen 5 aus sechs Spiegelauflageflächen 5.

Die Stützstruktur 3 bildet durch die Gitterstruktur ferner Aussparungen 17, durch die bei der Montage des Solarkollektormoduls 100 Spiegelstabilitätsstreben 150 geführt werden können. Diese werden von der Rahmenstruktur 140 des Solarkollektormoduls 100 zu einer Außenseite 120a des Spiegelelements 120 oder Außenseiten 120a mehrerer Spiegelelemente 120 geführt und dienen der der Erhöhung der Formsteifigkeit der Spiegelfläche 110.

Zur Befestigung des Spiegelelementes 120 oder der Spiegelelemente 120 an der Rahmenstruktur 140 können verstellbare Spiegelklammern 160 vorgesehen sein, mittels denen eine Feineinstellung erfolgen kann, wodurch Ungenauigkeiten der Rahmenstruktur 140 ausgeglichen werden können.

Nach der Montage des Solarkollektormoduls 100 kann die Montagevorrichtung 1 von den Lagerständerungen 130 abgenommen werden.

### Bezugszeichenliste

- 1: Montagevorrichtung
- 3: Stützstruktur
- 5: Spiegelauflagefläche
- 5a: Gruppe
- 7: Spiegelauflageblock
- 9: Aufhängehalterung
- 11: Vorsprung
- 13: Befestigungsvorrichtung
- 15: Gitterstrebengruppe
- 17: Aussparung
- 100: Solarkollektormodul
- 110: Spiegelfläche
- 120: Spiegelelement
- 120a: Außenseite
- 130: Lagerständerung
- 130a: Lageraussparung
- 140: Rahmenstruktur
- 150: Spiegelstabilitätsstrebe
- 160: Spiegelklammer

## Patentansprüche

1. Montagevorrichtung (1) für ein Solarkollektormodul (100) mit gekrümmter Spiegelfläche (110),
mit einer Stützstruktur (3) mit mehreren Spiegelauflageflächen (5), deren Position an der Stützstruktur (3) und Ausrichtung an eine vorgegebene Form eines Spiegelelements (120) oder mehrerer Spiegelelemente (120) des Solarkollektormoduls (100) angepasst ist,
**dadurch gekennzeichnet,**
**dass** die Montagevorrichtung (1) mindestens zwei Aufhängehalterungen (9) zum Aufhängen der Stützstruktur (3) an Lagerständerungen (130) des Solarkollektormoduls (100) aufweist,
und mindestens einer Befestigungsvorrichtung (13) zur lösbaren Fixierung einer Rahmenstruktur (140) des Solarkollektormoduls (100) an der Stützstruktur (3) umfasst.

2. Montagevorrichtung nach Anspruch 1, **dadurch gekennzeichnet, dass** die Stützstruktur (3) Aussparungen (17) zum Durchführen von Spiegelstabilitätsstreben (150) aufweist.

3. Montagevorrichtung nach Anspruch 1 oder 2, **dadurch gekennzeichnet, dass** die Stützstruktur (3) aus einer Gitterstruktur besteht.

4. Montagevorrichtung nach einem der Ansprüche 1 bis 3, **dadurch gekennzeichnet, dass** die Aufhängehalterungen (9) jeweils einen Vorsprung (11) aufweisen, der an eine Lageraussparung (130a) eines der Lagerständerungen (130) angepasst ist, wobei der Vorsprung (11) in die jeweilige Lageraussparung (130a) einsetzbar ist.

5. Montagevorrichtung nach einem der Ansprüche 1 bis 4, **dadurch gekennzeichnet, dass** die vorgebebene Form eine Parabolform ist.

6. Montagevorrichtung nach einem der Ansprüche 3 bis 5, **dadurch gekennzeichnet, dass** die Stützstruktur (3) mehrere Gitterstrebengruppen (15) aufweist, die sich in Krümmungsrichtung erstrecken, wobei jeweils eine Gruppe (5a) von Spiegelauflageflächen (5) an einer Gitterstrebengruppe (15) angeordnet ist.

7. Montagevorrichtung nach Anspruch 6, **dadurch gekennzeichnet, dass** eine Gruppe (5a) von Spiegelauflageflächen (5) mindestens 4 Spiegelauflageflächen (5) aufweist.

8. Verfahren zur Montage eines Solarkollektormoduls (100) mit gekrümmter Spiegelfläche (110), mit folgenden Schritten:
a) Anbringen einer Rahmenstruktur (140) des Solarkollektormoduls (100) an mindestens zwei Lagerständerungen (130) des Solarkollektormoduls (100),
b) Anordnen einer Montagevorrichtung (1) nach einem der Ansprüche 1 bis 7 an mindestens zwei Lagerständerungen (130), wobei die Stützstruktur (3) an den Lagerständerungen (130) mittels Aufhängehalterungen (9) aufgehängt und in eine Grundstellung ausgerichtet wird,
c) Fixierung der Rahmenstruktur des Solarkollektormoduls (100) an der Stützstruktur (3) mittels der mindestens einen Befestigungsvorrichtung (13),
d) Auflegen mindestens eines Spiegelelementes (120) auf die Spiegelauflageflächen (5),
e) Befestigen des mindestens einen Spiegelelementes (120) an der Rahmenstruktur,
f) Lösen der der Stützstruktur (3) von der Rahmenstruktur (140) des Solarkollektormoduls (100) und
g) Abnehmen der Montagevorrichtung (1) von den Lagerständerungen (130).

9. Verfahren nach Anspruch 8, **dadurch gekennzeichnet, dass** in Schritt b) die Stützstruktur (3) an den Lagerständerungen (130) mittels den Aufhängehalterungen (9) aufgehängt wird, indem jeweils der Vorsprung (11) einer der Aufhängehalterungen (9) in eine Lageraussparung (130a) eines der Lagerständerungen (130) eingesetzt wird.

10. Verfahren nach Anspruch 9, **dadurch gekennzeichnet, dass** die Vorsprünge (11) der Aufhängehalterungen (9) jeweils drehbar in der Lageraussparung (130a) gehaltert sind.

11. Verfahren nach einem der Ansprüche 8 bis 10, **dadurch gekennzeichnet, dass** in Schritt d) mehrere Spiegelelemente (120) auf die Spiegelauflageflächen (5) aufgelegt werden, wobei jedes der Spiegelelemente (120) an der Rahmenstruktur (140) befestigt wird.

12. Verfahren nach Anspruch 11, **dadurch gekennzeichnet, dass** die Stützstruktur (3) zusammen mit der Rahmenstruktur (140) in eine erste Richtung gedreht wird und eine erste Anzahl von Spiegelelementen (120) aufgelegt und an der Rahmenstruktur (140) befestigt wird und anschließend die Stützstruktur (3) zusammen mit der Rahmenstruktur (140) in eine zweite Richtung gedreht wird und eine zweite Anzahl von Spiegelelementen (120) aufgelegt und an der Rahmenstruktur (140) befestigt wird.

13. Verfahren nach Anspruch 12, **dadurch gekennzeichnet, dass** das Verdrehen in die erste Richtung um mindestens 45° von der Grundstellung der Stützstruktur (3) erfolgt und das Verdrehen in die zweite Richtung um mindestens 45° von der Grundstellung der Stützstruktur (3) erfolgt.

14. Verfahren nach einem der Ansprüche 8 bis 13, **dadurch gekennzeichnet, dass** in Schritt a) anschließend die Rahmenstruktur (140) in Zenit-Stellung ausgerichtet wird, vorzugsweise durch Inklinometermessung.

15. Verfahren nach einem der Ansprüche 8 bis 14, **dadurch gekennzeichnet, dass** in Schritt b) die Grundstellung der Stützstruktur (3) die Zenit-Stellung ist, wobei vorzugsweise die Ausrichtung durch Inklinometermessung erfolgt und/oder dass zwischen Schritt e) und f) Spiegelstabilitätsstreben (150) angebracht werden, die die Rahmenstruktur (140) mit einer Außenseite (120a) des Spiegelelements (120) oder mit Außenseiten (120a) der Spiegelelemente (120) verbinden.

## Claims

1. A mounting device (1) for a solar collector module (100) having a curved mirror surface (110),
comprising a support structure (3) having a plurality of mirror support surfaces (5), whose position on the support structure (3) and orientation are adapted to a predetermined shape of a mirror element (120) or several mirror elements (120) of the solar collector module (100),
**characterized in that**
the mounting device (1) comprises at least two suspension brackets (9) for suspending the support structure (3) from the bearing supports (130) of the solar collector module (100),
and comprises at least one fixing device (13) for detachably fixing a frame structure (140) of the solar collector module (100) to the support structure (3).

2. The mounting device according to claim 1, **characterized in that** the support structure (3) has recesses (17) for passing through mirror stability struts (150).

3. The mounting device according to claim 1 or 2, **characterized in that** the support structure (3) consists of a lattice structure.

4. The mounting device according to any one of claims 1 to 3, **characterized in that** the suspension brackets (9) each have a projection (11) that is adapted to a bearing recess (130a) of one of the bearing supports (130), wherein the projection (11) can be inserted into the respective bearing recess (130a).

5. The mounting device according to any one of claims 1 to 4, **characterized in that** the predetermined shape is a parabolic shape.

6. The mounting device according to any one of claims 3 to 5, **characterized in that** the support structure (3) comprises a plurality of lattice strut groups (15) extending in the direction of curvature, wherein one group (5a) of mirror support surfaces (5) is respectively arranged on a lattice strut group (15).

7. The mounting device according to claim 6, **characterized in that** a group (5a) of mirror support surfaces (5) comprises at least 4 mirror support surfaces (5).

8. A method for mounting a solar collector module (100) having a curved mirror surface (110), comprising the following steps:
a) attaching a frame structure (140) of the solar collector module (100) to at least two bearing supports (130) of the solar collector module (100),
b) arranging a mounting device (1) according to any one of claims 1 to 7 on at least two bearing supports (130), wherein the support structure (3) is suspended from the bearing supports (130) by means of suspension brackets (9) and aligned in an initial position,
c) fixing the frame structure of the solar collector module (100) to the support structure (3) by means of at least one fixing device (13),
d) placing at least one mirror element (120) on the mirror support surfaces (5),
e) securing the at least one mirror element (120) to the frame structure,
f) detaching the support structure (3) from the frame structure (140) of the solar collector module (100), and
g) removing the mounting device (1) from the bearing supports (130).

9. The method according to claim 8, **characterized in that**, in step b), the support structure (3) is suspended from the bearing supports (130) by means of the suspension brackets (9) by respectively inserting the projection (11) of one of the suspension brackets (9) into a bearing recess (130a) of one of the bearing supports (130).

10. The method according to claim 9, **characterized in that** the projections (11) of the suspension brackets (9) are each rotatably mounted in the bearing recess (130a).

11. The method according to any one of claims 8 to 10, **characterized in that**, in step d), a plurality of mirror elements (120) are placed on the mirror support surfaces (5), wherein each of the mirror elements (120) is secured to the frame structure (140).

12. The method according to claim 11, **characterized in that** the support structure (3) is rotated together with the frame structure (140) in a first direction, and a first number of mirror elements (120) is placed and secured to the frame structure (140), and subsequently the support structure (3) is rotated together with the frame structure (140) in a second direction, and a second number of mirror elements (120) is placed and secured to the frame structure (140).

13. The method according to claim 12, **characterized in that** the rotation in the first direction is performed by at least 45° from the initial position of the support structure (3), and the twisting in the second direction is performed by at least 45° from the initial position of the support structure (3).

14. The method according to any one of claims 8 to 13, **characterized in that**, in step a), the frame structure (140) is subsequently aligned in the zenith position, preferably by inclinometer measurement.

15. The method according to any one of claims 8 to 14, **characterized in that**, in step b), the initial position of the support structure (3) is the zenith position, wherein the alignment is preferably performed by inclinometer measurement, and/or **in that**, between steps e) and f), mirror stability struts (150) are installed, which connect the frame structure (140) to an outer surface (120a) of the mirror element (120) or to outer surfaces (120a) of the mirror elements (120).

## Revendications

1. Dispositif de montage (1) pour un module de capteur solaire (100) comportant une surface de miroir courbe (110),
comportant une structure de soutien (3) comportant plusieurs surfaces d'appui pour miroir (5), dont la position sur la structure de soutien (3) et l'orientation sont adaptées à une forme prédéfinie d'un élément de miroir (120) ou de plusieurs éléments de miroir (120) du module de capteur solaire (100),
**caractérisé en ce que** le dispositif de montage (1) présente au moins deux supports de suspension (9) destinés à suspendre la structure de soutien (3) à des montants de support (130) du module de capteur solaire (100), et comprend au moins un dispositif de fixation (13) destiné à fixer de manière amovible une structure de châssis (140) du module de capteur solaire (100) sur la structure de soutien (3).

2. Dispositif de montage selon la revendication 1, **caractérisé en ce que** la structure de soutien (3) présente des évidements (17) permettant le passage d'entretoises de stabilisation de miroir (150).

3. Dispositif de montage selon la revendication 1 ou 2, **caractérisé en ce que** la structure de soutien (3) est constituée d'une structure en treillis.

4. Dispositif de montage selon l'une des revendications 1 à 3, **caractérisé en ce que** les supports de suspension (9) présentent respectivement une saillie (11) qui est adaptée à un évidement de support (130a) de l'un des montants de support (130), dans lequel la saillie (11) peut être insérée dans l'évidement de support (130a) respectif.

5. Dispositif de montage selon l'une des revendications 1 à 4, **caractérisé en ce que** la forme prédéfinie est une forme de parabole.

6. Dispositif de montage selon l'une des revendications 3 à 5, **caractérisé en ce que** la structure de soutien (3) présente plusieurs groupes d'entretoises de treillis (15) s'étendant dans la direction de courbure, dans lequel respectivement un groupe (5a) de surfaces d'appui pour miroir (5) est disposé sur un groupe d'entretoises de treillis (15).

7. Dispositif de montage selon la revendication 6, **caractérisé en ce qu'**un groupe (5a) de surfaces d'appui pour miroir (5) présente au moins quatre surfaces d'appui pour miroir (5).

8. Procédé pour le montage d'un module de capteur solaire (100) comportant une surface de miroir courbe (110), comportant les étapes suivantes :
a) mise en place d'une structure de châssis (140) du module de capteur solaire (100) sur au moins deux montants de support (130) du module de capteur solaire (100),
b) disposition d'un dispositif de montage (1) selon l'une des revendications 1 à 7 sur au moins deux montants de support (130), dans lequel la structure de soutien (3) est suspendue aux montants de support (130) à l'aide de supports de suspension (9) et est orientée dans une position de base,
c) fixation de la structure de châssis du module de capteur solaire (100) sur la structure de soutien (3) à l'aide de l'au moins un dispositif de fixation (13),
d) pose d'au moins un élément de miroir (120) sur les surfaces d'appui pour miroir (5),
e) fixation de l'au moins un élément de miroir (120) à la structure de châssis,
f) détachement de la structure de soutien (3) de la structure du châssis (140) du module de capteur solaire (100) et
g) retrait du dispositif de montage (1) des montants de support (130).

9. Procédé selon la revendication 8, **caractérisé en ce que**, à l'étape b), la structure de soutien (3) est suspendue aux montants de support (130) à l'aide des supports de suspension (9) par le fait que respectivement la saillie (11) de l'un des supports de suspension (9) est insérée dans un évidement de support (130a) de l'un des montants de support (130).

10. Procédé selon la revendication 9, **caractérisé en ce que** les saillies (11) des supports de suspension (9) sont respectivement maintenues de manière à pouvoir tourner dans l'évidement de support (130a).

11. Procédé selon l'une des revendications 8 à 10, **caractérisé en ce que**, à l'étape d), plusieurs éléments de miroir (120) sont posés sur les surfaces d'appui pour miroir (5), dans lequel chacun des éléments de miroir (120) est fixé sur la structure de châssis (140).

12. Procédé selon la revendication 11, **caractérisé en ce que** la structure de soutien (3) est tournée, conjointement avec la structure de châssis (140), dans une première direction, et un premier nombre d'éléments de miroir (120) est posé et fixé sur la structure de châssis (140), puis la structure de soutien (3) est tournée, conjointement avec la structure de châssis (140), dans une seconde direction, et un second nombre d'éléments de miroir (120) est posé et fixé sur la structure de châssis (140).

13. Procédé selon la revendication 12, **caractérisé en ce que** la rotation dans la première direction est effectuée d'au moins 45° par rapport à la position de base de la structure de soutien (3) et la rotation dans la seconde direction est effectuée d'au moins 45° par rapport à la position de base de la structure de soutien (3).

14. Procédé selon l'une des revendications 8 à 13, **caractérisé en ce que**, à l'étape a), la structure de châssis (140) est ensuite orientée en position zénithale, de préférence par mesure inclinométrique.

15. Procédé selon l'une des revendications 8 à 14, **caractérisé en ce que**, à l'étape b), la position de base de la structure de soutien (3) est la position zénithale, dans lequel, de préférence, l'orientation est effectuée par mesure inclinométrique, et/ou **en ce qu'**entre les étapes e) et f), des entretoises de stabilité de miroir (150) sont mises en place, lesquelles relient la structure de châssis (140) à une face extérieure (120a) de l'élément de miroir (120) ou à des faces extérieures (120a) des éléments de miroir (120).
